# FASCICULE DE BREVET EUROPEEN

(11) **EP 1 056 350 B1**
(45) Date de publication et mention de la délivrance du brevet: **15.01.2003**
(21) Numéro de dépôt: 99906298.7
(22) Date de dépôt: 24.02.1999
(51) Int. Cl.: A23C 19/032, A23C 19/06

(54) **COMPOSITION POUR L'AROMATISATION DE FROMAGES**
ZUSAMMENZETZUNG ZUR AROMATISIERUNG VON KÄSE
CHEESE FLAVOURING COMPOSITION

(30) Priorité: 27.02.1998 FR 9802434
(43) Date de publication de la demande: 06.12.2000
(73) Titulaire: Texel, 86220 Dangée-Saint-Romain (FR)
(72) Inventeur: CHATAUD, Jean, F-37800 Noyant de Touraine (FR); MARTIN, Valérie, F-86530 Availles-en-Chatellerault (FR); PRIGENT, Jean-René, F-86100 Chatellerault (FR)
(74) Mandataire: Jacobson, Claude
(86) Numéro de dépôt international: FR9900416
(87) Numéro de publication internationale: WO99043214

(56) Documents cités:
- WO-A-93/09676
- US-A- 4 650 759
- STERN N J ET AL: "Differentiation of selected Enterobacteriaceae by pyrolysis-gas-liquid chromatography." APPLIED AND ENVIRONMENTAL MICROBIOLOGY, vol. 38, no. 6, 1979, pages 1098-1102, XP002084414 Dep. of Food Sci. & Tech., Virginia Polytech. Inst. & State Univ., Blacksburg, Virginia 24061, USA
- H. JOOSTEN: "Conditions allowing the formation of biogenic amines in cheese" NETHERLANDS MILK AND DAIRY JOURNAL., vol. 41, no. 4, 1988, pages 329-357, XP002084415 WAGENINGEN NL
- RUTZINSKI J L ET AL: "Behavior of Enterobacter aerogenes and Hafnia species during the manufacture and ripening of Camembert cheese." JOURNAL OF FOOD PROTECTION, vol. 42, no. 10, 1979, pages 790-793, XP002084417 Dep. of Food Sci., Univ. of Wisconsin-Madison, Madison, Wisconsin 53706, USA
- RUTZINSKI J L ET AL: "Behavior of Enterobacter species and Hafnia species in skimmilk during fermentation by lactic acid bacteria." JOURNAL OF FOOD PROTECTION, vol. 43, no. 9, 1980, pages 720-728, XP002084418 Dep. of Food Sci., Univ. of Wisconsin-Madison, Madison Wisconsin 53706, USA

## Description

La présente invention concerne l'industrie laitière en particulier la fabrication de fromages, notamment la fabrication de fromages à pâte molle à partir de lait ayant subi un processus de pasteurisation ou de thermisation

Pour des raisons bactériologiques et également dans un souci de sécurité alimentaire, de nombreux fromages sont fabriqués au départ de laits pasteurisés ou thermisés. Il en résulte par rapport aux fromages fabriques à l'aide de lait cru un goût modifié. Pour cette raison, les fabricants de fromages recourent à des mélanges d'aromatisation contenant des microorganismes qui par leur action enzymatique, sont susceptibles de restituer un goût sensiblement équivalent à celui des fromages à base de lait cru.

Typiquement, ces mélanges sont additionnés au lait en même temps que les autres ferments intervenant dans les différentes étapes de coagulation et maturation des fromages.

Les ferments d'aromatisation disponibles à ce jour donnent toutefois des résultats insuffisants et ne restituent pas entièrement le goût typique retrouvé dans les fromages au lait cru.

L'invention a donc pour objet de fournir une composition pour l'aromatisation destinée à reproduire ou rehausser le goût typique des fromages au lait cru tout en évitant les problèmes de contaminations microbiennes pouvant exister à partir de laits non pasteurisés.

Les inventeurs ont à présent découvert qu'il était possible de restituer aux fromages à base de lait pasteurisé ou thermisé le goût de fromages au lait cru ou de rehausser le goût de fromages au lait cru en ajoutant soit dans le lait soit à un stade ultérieur de la fabrication du fromage une composition comprenant une association du microorganisme Hafnia alvei avec au moins un autre microorganisme du genre Lactobacillus et au moins une levure. On ajoute *Hafnia alvei* dans des conditions telles que le taux de *Hafnia alvei* dans le fromage ne dépasse pas significativement un niveau supérieur à 1.5 10⁶ UFC/g de fromage, et de préférence supérieur à environ 10⁶ UFC/g de fromage.

*Hafnia alvei* est une entérobactérie que l'on trouve dans le tube digestif de l'homme et des animaux.

On ajoutera selon l'invention une *souche* d'*Hafnia alvei* non pathogène. Avantageusement, on ajoute une souche d'*Hafnia alvei* ne comprenant pas le gène eae (gène d'attachement et d'effacement).

De manière surprenante, les inventeurs ont découvert qu'il était possible de maintenir tout au long de la vie du fromage un seuil de 1.5 10⁶ UFC/g de fromage, de préférence environ 10⁶ UFC/g en *Hafnia alvei*, lorsque celle-ci était ajoutée dans le lait ou à un stade ultérieur de la fabrication du fromage, en l'absence d'eau.

Avantageusement, on ajoutera *Hafnia alvei* sous forme lyophilisée.

La croissance d'*Hafnia alvei* peut en outre être maîtrisée dans les conditions de l'invention en jouant sur l'environnement bactérien de *Hafnia alvei*.

Les lactobacilles et levures de la composition d'aromatisation selon l'invention ainsi que les autres microorganismes éventuellement ajoutés sont bien entendu des microorganismes non pathogènes, traditionnellement utilisés dans les aliments, notamment dans les fromages.

Pour la levure, on préfère une levure du genre *Kluyveromyces*. notamment *Kluyveromyces lactis* ou du genre *Candida*, notamment *valida.*

On a trouvé que l'association *Kluyveromyces,* notamment *lactis* et *Candida,* notamment *valida* constituerait un environnement particulièrement avantageux pour *Hafnia alvei*.

En tant que lactobacille, on ajoute avantageusement *Lactobacillus casei*, de préférence de la sous-espèce *paracasei*.

Avantageusement, la composition selon l'invention comprend également au moins une souche de corynébactéries, notamment *Brevibacterium linens* ou *Corynebacterium flavescens*, l'association des deux genres de microorganismes étant particulièrement avantageuse du point de vue du contrôle de la croissance d'*Hafnia alvei*.

La composition selon l'invention comprend en outre de préférence au moins une souche de staphylocoques, *Staphylococcus carnosus* étant préférée.

Des conditions optimales sont atteintes lorsque le rapport quantitatif d'*Hafnia alvei* aux différents autres microorganismes se situe dans les plages suivantes.
- *Hafnia alvei*/levures(s) : 200/1 à 20/1, de préférence environ 50/1 ;
   notamment
   - *Hafnia alveilKluyveromyces lactis* : 200/1 à 50/1, de préférence environ 100/1 ;
   - *Hafnia alveilCandida valida* : 200/1 à 50/1, de préférence environ 100/1 ;
- *Hafnia alvei*/*Lactobacillus casei* : 4/1 *à* 1/1, de préférence environ 2/1 ;
- *Hafnia alvei*/*Staphylococcus carnosus* : 4/1à 1/1. de préférence environ 2/1 ;
- *Hafnia alvei*/*Corynebacteries* : 4/1 à 1/1. de préférence environ 10/6 :
   notamment
   - *Hafnia alveilBrevibacterium linens* : 4/1 à 1/1. de préférence environ 2/1 ;
   - *Hafnia alveilCorynebacterium flavescens* : 20/1 à 5/1, de préférence environ 10/1.

Les différents microorganismes peuvent se présenter sous la forme d'un mélange déshydraté de tous les constituants, notamment lyophilisé ou sous forme séparée.

Avantageusement, *Hafnia alvei* est sous forme lyophilisée dans un conditionnement séparé, les autres microorganismes étant sous la forme d'un mélange séparé de souches lyophilisées, auquel cas elles seront présentes dans un conditionnement distinct.

La quantité de microorganismes ajoutée dans le lait est avantageusement pour 1000 I de lait la suivante :
- *Hafnia alvei* à raison de 10¹⁰ UFC à 10¹² UFC, de préférence 10¹¹ UFC ;
- *Kluyveromyces lactis* à raison de 10⁸ UFC à 10¹⁰ UFC. de préférence 10⁹ UFC ;
- *Candida valida* à raison de 10⁸ UFC à 10¹⁰ UFC. de préférence 10⁹ UFC ;
- *Lactobacillus casei paracasei* à raison de 5.10⁹ UFC à 5.10¹¹ UFC, de préférence 5.10¹⁰ UFC ;
- *Staphylococcus carnosus* à raison de 5.10⁹ UFC à 5.10¹¹ UFC, de préférence 5.10¹⁰ UFC ;
- *Brevibacterium linens* à raison de 5.10⁹ UFC à 5.10¹¹ UFC, de préférence 5.10¹¹ UFC ;
- *Corynebacterium flavescens* à raison de 10⁹ UFC à 10¹¹ UFC, de préférence 10¹⁰ UFC.

D'une manière plus générale, l'invention a également pour objet l'utilisation d'une souche non pathogène d'*Hafnia alvei* pour reproduire ou rehausser le goût typique de fromages au lait cru, notamment de fromages fabriqués à partir de lait pasteurisé ou thermisé. en particulier de fromages à pâte molle, de préférence à pâte molle à croûte fleurie. Le lait est de préférence un lait de vache ou de chèvre.

Une souche particulièrement avantageuse est la souche HA-2472 déposée à la CNCM le 4 décembre 1997 sous le numéro I-1947 et à la DSM le 9 janvier 1998 sous le numéro 11910.

Cette souche est non pathogène, aucun gène de pathogénécité connu n'ayant été retrouvé. En particulier, cette souche ne contient pas le gène eae (gène d'attachement et d'effacement) codant pour l'intimine. ni de gène codant pour les verotoxines VT1 et VT2.

L'invention a également pour objet un procédé destiné à conférer à un fromage obtenu par un procédé mettant en oeuvre une technologie à lait pasteurisé ou thermisé, notamment un fromage affiné à pâte molle. un arôme qui est sensiblement celui des fromages à base de lait cru, ou pour rehausser le goût de fromages obtenus à partir de lait cru, comprenant l'addition au lait. le cas échéant, pasteurisé ou thermisé ou à la pâte fromagère d'une composition d'aromatisation selon l'invention.

Avantageusement, la croissance d'*Halfnia alvei* est maintenue à un niveau bactérien inférieur à 1,5 10⁶ UFC/g de fromage, de préférence inférieur à 10⁶ UFC/g de fromage tout au long de la durée de vie du produit, l'optimum de l'arôme étant obtenu à environ 30-35 jours d'emballage pour un fromage à pâte molle.

Ce niveau est maintenu de façon avantageuse par addition dans le lait servant à la fabrication du fromage ou dans la pâte fromagère à un stade ultérieur de la fabrication du fromage des microorganismes décrits ci-dessus.

L'invention a également pour objet une composition lactée notamment du lait ou une pâte fromagère, comprenant une composition de microorganisme(s) telle que définie ci-dessus.

On donnera ci-après un exemple d'une composition d'aromatisation selon l'invention ainsi que les résultats obtenus avec cette composition.

### Exemple 1 : Composition d'aromatisation

- pastille lyophilisée contenue dans un flacon
   - *Hafnia alvei* : 10¹² UFC:
- sachet de poudre lyophilisée :
   - *Kluyveromyces lactis* : 10¹⁰ UFC ;
   - *Candida valida :* 10¹⁰ UFC ;
   - *Lactobacillus casei para casei* :5.10¹¹ UFC ;
   - *Staphylococcus carnosus* : 5.10¹¹ UFC ;
   - *Brevibacterium linens* : 5.10¹¹ UFC ;
   - *Corynebacterium flavescens* : 10¹¹ UFC.

Cette composition a été utilisée pour ensemencer 10 000 litres de lait de vache pasteurisé avant empresurage, en vue de la fabrication de camemberts.

Des tests d'analyses sensorielles ont été réalisés en laboratoire extérieur spécialisé dans l'analyse sensorielle sur ces camemberts et ont fourni les résultats suivants pour la persistance (qualité en bouche). la typicité (goût typique du lait cru), le plaisir gustatif provoqué chez le dégustateur, ces différents paramètres étant appréciés de manière subjective et notés de 0 à 20, 0 étant la notation la moins bonne et 20 la meilleure.

Par comparaison, des camemberts vendus dans le commerce ont fourni les résultats d'analyse sensorielle suivants :

| | Exemple 1 | Ex comparatif 1 | Ex comparatif 2 B603-C2 | Ex comparatif 3 | Ex comparatif 4 E504-T |
|---|---|---|---|---|---|
| Persistance* | 12.8 | 10.0 | 11.6 | 11.6 | 11.2 |
| Typicité** | 11.2 | 7.6 | 8.4 | 7.6 | 10.8 |
| Plaisir | 11.6 | 8.4 | 9.6 | 6.4 | 10.8 |
| Classe | 1 | 4 | 3 | 5 | 2 |

Les appréciations données par un panel de consommateurs ont en outre fourni les résultats suivants pour le fromage obtenu avec le mélange d'aromatisation selon l'invention et les fromages vendus dans le commerce (exemples comparatifs 1 à 4) :
- Exemple 1 : fromage agréable, aromatique, équilibré, typique
- Exemple comparatif 1 fadeur dominante, peu typique. légèrement amère.
- Exemple comparatif 2 Là aussi c'est le fade qui domine Arômes lactés (crème). Caractère un peu sec.
- Exemple comparatif 3 : Fromage trop salé, masquant le reste de la dégustation.
- Exemple comparatif 4 : fromage un pue trop salé. sans autres défauts notables avec même une certaine typicité.

## Revendications

1. Composition pour l'aromatisation de fromages, notamment de fromages à pâte molle, comprenant une association du microorganisme *Hafnia alvei* avec au moins un microorganisme du genre *Lactobacillus*, et au moins une levure.

2. Composition selon la revendication 1, caractérisée en ce *Hafnia alvei* est sous forme lyophilisée.

3. Composition selon la revendication 1 ou 2, **caractérisée en ce qu'**elle comprend à titre de levure *Kluyveromyces lactis* et/ou *Candida valida*.

4. Composition selon la revendication 1, 2 ou 3, **caractérisée en ce qu'**elle comprend à titre de *Lactobacillus, Lactobacillus casei*.

5. Composition selon la revendication 4, **caractérisée en ce qu'**elle comprend *Lactobacillus casei paracasei*.

6. Composition selon l'une quelconque des revendications 1 à 5, **caractérisée en ce qu'**elle comprend au moins une souche de Corynébactéries.

7. Composition selon la revendication 6, **caractérisée en ce qu'**elle comprend *Brevibacterium linens* et/ou *Corynebacterium* flavescens.

8. Composition selon l'une quelconque des revendications 1 à 7, **caractérisée en ce qu'**elle comprend au moins une souche de staphylocoques.

9. Composition selon la revendication 8, **caractérisée en ce qu'**elle comprend *Staphylococcus carnosus*.

10. Composition selon la revendication 1, **caractérisée en ce qu'**elle comprend :
- *Hafnia alvei* à raison de 10¹² UFC ;
- *Kluyveromyces lactis* à raison de 10¹⁰ UFC ;
- *Candida valida* à raison de 10¹⁰ UFC ;
- *Lactobacillus casei pseudoplantarum* à raison de 5.10¹¹ UFC ;
- *Staphylococcus carnosus* à raison de 5.10¹¹ UFC;
- *Brevibacterium linens* à raison de 5.10¹¹ UFC ;
- *Corynebacterium flavescens* à raison de 10¹¹ UFC.

11. Composition selon l'une quelconque des revendications précédentes, **caractérisée en ce qu'**elle comprend la souche *Hafnia alvei* déposée à la CNCM le 4 décembre 1997 sous le numéro I-1947 et à la DSM le 9 janvier 1998 sous le numéro 11910.

12. Composition selon l'une quelconque des revendications précédentes **caractérisée en ce que** les différents microorganismes sont en mélange ou sous forme séparée.

13. Composition selon la revendication 12, **caractérisée en ce que** les différents microorganismes sont sous forme d'un mélange de souches lyophilisées ou sous forme de souches conditionnées de manière séparée.

14. Souche d'*Hafnia alvei* déposée à la CNCM le 4 décembre 1997 sous le numéro I-1947 et à la DSM le 9 janvier 1998 sous le numéro 11910.

15. Procédé pour conférer à un fromage obtenu par un procédé mettant en oeuvre une technologie à lait pasteurisé ou thermisé, notamment un fromage affiné à pâte molle, un arôme qui est sensiblement celui des fromages à base de lait cru, ou pour rehausser le goût de fromages obtenus à partir de lait cru, comprenant l'addition au lait, le cas échéant, pasteurisé ou thermisé ou à la pâte fromagère d'une composition d'aromatisation selon l'une quelconque des revendications 1 à 13.

16. Procédé selon la revendication 15, **caractérisé en ce que** la population de *Hafnia alvei* est maintenue à un niveau inférieur à 1,5 10⁶ UFC/g de fromage, de préférence inférieur à 10⁶ UFC/g de fromage tout au long de la durée de vie du produit.

17. Procédé selon la revendication 15 ou 16, **caractérisé en ce que** l'on ajoute pour 1000 I de lait, les quantités suivantes de microorganismes:
- *Hafnia alvei* à raison de 10¹⁰ UFC à 10¹² UFC ;
- *Kluyveromyces lactis* à raison de 10⁸ UFC à 10¹⁰ UFC ;
- *Candida valida* à raison de 10⁸ UFC à 10¹⁰ UFC ;
- *Lactobacillus casei paracasei* à raison de 5.10⁹ UFC à 5.10¹¹ UFC ;
- *Staphylococcus carnosus* à raison de 5.10⁹ UFC à 5.10¹¹ UFC ;
- *Brevibacterium linens* à raison de 5.10⁹ UFC à 5.10¹¹ UFC ;
- *Corynebacterium flavescens* à raison de 10⁹ UFC à 10¹¹ UFC.

18. Procédé selon l'une quelconque des revendications 15 à 17, **caractérisé en ce que** le lait est du lait de vache et/ou de chèvre.

19. Utilisation d'une souche d'*Hafnia alvei* pour reproduire ou rehausser le goût typique de fromages au lait cru.

20. Utilisation selon la revendication 19, **caractérisée en ce que** la souche d'*Hafnia alvei* ne comprend pas le gène eae.

21. Composition lactée, notamment lait ou pâte fromagère, **caractérisée en ce qu'**elle comprend une composition telle que définie dans l'une quelconque des revendications 1à 11.

## Patentansprüche

1. Zusammensetzung zur Aromatisierung von Käse, insbesondere Weichkäse, umfassend eine Kombination des Mikroorganismus *Hafnia alvei* mit mindestens einem Mikroorganismus vom Typ *Lactobacilluns* und mindestens einer Hefe.

2. Zusammenseztung nach Anspruch 1, **dadurch gekennzeichnet, daß** *Hafnia alvei* in lyophilisierter Form vorliegt.

3. Zusammensetzung nach Anspruch 1 oder 2, **dadurch gekennzeichnet, daß** sie als Hefe *Kluyveromyces lactis* und/oder *Candida valida* umfaßt.

4. Zusammensetzung nach Anspruch 1, 2 oder 3, **dadurch gekennzeichnet, daß** sie als *Lactobacillus Lactobacillus casei* umfaßt.

5. Zusammensetzung nach Anspruch 4, **dadurch gekennzeichnet, daß** sie Lactobacillus casei paracasei umfaßt.

6. Zusammensetzung nach einem der Ansprüche 1 bis 5, **dadurch gekennzeichnet, daß** sie mindestens einen Stamm von Corynebakterien umfaßt.

7. Zusammensetzung nach Anspruch 6, **dadurch gekennzeichnet, daß** sie *Brevibacterium linens* und/oder *Corynebacterium flavescens* umfaßt.

8. Zusammensetzung nach einem der Ansprüche 1 bis 7, **dadurch gekennzeichnet, daß** sie mindestens einen Stamm von Staphylokokken umfaßt.

9. Zusammensetzung nach Anspruch 8, **dadurch gekennzeichnet, daß** sie *Staphylococcus camosus* umfaßt.

10. Zusammensetzung nach Anspruch 1, **dadurch gekennzeichnet, daß** sie umfaßt:
- *Hafnia alvei* zu 10¹² KBE;
- *Kluyveromyces lactis* zu 10¹⁰ KBE;
- *Candida valida* zu 10¹⁰ KBE;
- *Lactobacillus casei pseudoplantarum* zu 5.10¹¹ KBE;
- *Staphylococcus camosus zu* 5.10¹¹ KBE;
- *Brevibacterium linens* zu 5.10¹¹ KBE;
- *Corynebacterium flavescens* zu 10¹¹ KBE;

11. Zusammensetzung nach einem der vorhergehenden Ansprüche, **dadurch gekennzeichnet, daß** sie den Stamm Hafnia alvei umfaßt, der am 4. Dezember 1997 bei der CNCM unter der Nummer I-1947 und am 9.Januar 1998 bei der DSM unter der Nummer 11910 hinterlegt wurde.

12. Zusammensetzung nach einem der vorhergehenden Ansprüche, **dadurch gekennzeichnet, daß** die verschiedenen Mikroorganismen in Mischung oder in getrennter Form vorliegen.

13. Zusammensetzung nach Anspruch 12, **dadurch gekennzeichnet, daß** die einzelnen Mikroorganismen in Form einer Mischung von lyophilisierten Stämmen oder in Form von getrennt konditionierten Stämmen vorliegen.

14. Stamm von Hafnia alvei, der am 4. Dezember 1997 bei der CNCM unter der Nummer I-1947 und am 9. Januar 1998 bei der DSM unter der Nummer 11910 hinterlegt wurde.

15. Verfahren, um einem Käse, der nach einem Verfahren unter Verwendung einer Technologie mit pasteurisierter oder thermisierter Milch erhalten wurde, insbesondere einem gereiften Weichkäse, ein Aroma zu verleihen, das im wesentlichen das von Käse auf Rohmilchbasis ist, oder um den Geschmack von aus Rohmilch erhaltenem Käse zu verstärken, umfassend das Versetzen der ggf. pasteurisierten oder thermisierten Milch oder der Käsemasse mit einer Aromatisierungszusammensetzung nach einem der Ansprüche 1 bis 13.

16. Verfahren nach Anspruch 15, **dadurch gekennzeichnet, daß** die Population von *Hafnia alvei* während der gesamten Lebensdauer des Produkts auf einem Niveau unter 1,5 10⁶ KBE/g Käse, vorzugsweise unter 10⁶ KBE/g Käse, gehalten wird.

17. Verfahren nach Anspruch 15 oder 16, **dadurch gekennzeichnet, daß** man auf 1000 1 Milch die folgenden Mengen von Mikroorganismen zusetzt:
- *Hafnia alvei* zu 10¹⁰ KBE bis 10¹² KBE;
- *Kluyveromyces lactis* zu 10⁸ KBE bis 10¹⁰ KBE;
- *Candida valida* zu 10⁸ KBE bis 10¹⁰ KBE;
- *Lactobacillus casei paracasei* zu 5.10⁹ bis 5.10¹¹ KBE;
- *Staphylococcus carnosus* zu 5.10⁹ KBE bis 5.10¹¹ KBE;
- *Brevibacterium linens* zu 5.10⁹ KBE bis 5.10¹¹ KBE;
- *Corynebacterium flavescens* zu 10⁹ KBE bis 10¹¹ KBE.

18. Verfahren nach einem der Ansprüche 15 bis 17, **dadurch gekennzeichnet, daß** die Milch Kuhmilch und/oder Ziegenmilch ist.

19. Verwendung eines Stamms von *Hafnia alvei* zum Reproduzieren oder Verstärken des typischen Geschmacks von Rohmilchkäse.

20. Verwendung nach Anspruch 19, **dadurch gekennzeichnet, daß** der Stamm von *Hafnia alvei* nicht das eae-Gen umfasst.

21. Milchzusammensetzung, insbesondere Milch oder Käsemasse, **dadurch gekennzeichnet, daß** sie eine Zusammensetzung gemäß einem der Ansprüche 1 bis 11 umfaßt.

## Claims

1. Composition for flavouring cheeses, particularly soft cheeses, comprising a combination of the microorganism *Hafnia alvei* with at least one microorganism of the genus *Lactobacillus,* and at least one yeast.

2. Composition according to claim 1, **characterised in that** the *Hafnia alvei* is in lyophilised form.

3. Composition according to claim 1 or 2, **characterised in that** it comprises *Kluyveromyces lactis* and/or *Candida valida as* the *yeast.*

4. Composition according to claim 1 or 2, **characterised in that** it comprises *Lactobacillus casei* as the *Lactobacillus.*

5. Composition according to claim 4, **characterised in that** it comprises *Lactobacillus casei paracasei*.

6. Composition according to any one of claims 1 to 5, **characterised in that** it comprises at least one strain of Corynebacteria.

7. Composition according to claim 6, **characterised in that** it comprises *Brevibacterium linens* and/or *corynebacterium flavescens*.

8. Composition according to any one of claims 1 to 7, **characterised in that** it comprises at least one strain of Staphylococci.

9. Composition according to claim 8, **characterised in that** it comprises *Staphylococcus carnosus*.

10. Composition according to claim 1, **characterised in that** it comprises:
- *Hafnia alvei* in an amount of 10¹² CFU;
- *Kluyveromyces lactis* in an amount of 10¹⁰ CFU;
- *Candida valida* in an amount of 10¹⁰ CFU;
- *Lactobacillus casei pseudoplantarum* in an amount of 5.10¹¹ CFU;
- *Staphylococcus carnosus* in an amount of 5.10¹¹ CFU;
- *Brevibacterium linens* in an amount of 5.10¹¹ CFU;
- *Corynebacterium flavescens* in an amount of 10¹¹ CFU.

11. Composition according to any one of the preceding claims, **characterised in that** it comprises the strain of *Hafnia alvei* deposited at the CNCM on 4th December 1997 under the number I-1947 and at the DSM on 9th January 1998 under the number 11910.

12. Composition according to any one of the preceding claims, **characterised in that** the different microorganisms are mixed together or separate.

13. Composition according to claim 12, **characterised in that** the different microorganisms are in the form of a mixture of lyophilised strains or in the form of separately packaged strains.

14. Strain of *Hafnia alvei* deposited at the CNCM on 4th December 1997 under the number I-1947 and at the DSM on 9th January 1998 under the number 11910.

15. Process for giving a cheese obtained by a technological process using pasteurised or heat-treated milk, notably a fully matured soft cheese, a flavour which is substantially that of cheeses based on raw milk, or for bringing out the flavour of cheeses obtained from raw milk, comprising adding to the milk, which may optionally be pasteurised or heat-treated, or to the cheese curds, a flavouring composition according to any one of claims 1 to 13.

16. Process according to claim 15, **characterised in that** the population of *Hafnia alvei* is maintained at a level below 1.5 10⁶ CFU/g of cheese, preferably below 10⁶ CFU/g of cheese throughout the shelf life of the product.

17. Process according to claim 15 or 16, **characterised in that** the following quantities of microorganisms are added per 1000 litres of milk:
- *Hafnia alvei* in an amount of 10¹⁰ CFU to 10¹² CFU;
- *Kluyveromyces lactis* in an amount of 10⁸ CFU to 10¹⁰ CFU;
- *Candida valida* in an amount of 10⁸ CFU to 10¹⁰ CFU;
- *Lactobacillus casei paracasei* in an amount of 5.10⁹ CFU to 5.10¹¹ CFU;
- *Staphylococcus carnosus* in an amount of 5.10⁹ CFU to 5.10¹¹ CFU;
- *Brevibacterium linens* in an amount of 5.10⁹ CFU to 5.10¹¹ CFU;
- *Corynebacterium flavescens* in an amount of 10⁹ CFU to 10¹¹ CFU.

18. Process according to any one of claims 15 to 17, **characterised in that** the milk is cows' milk and/or goats' milk.

19. Use of a strain of Hafnia alvei for reproducing or bringing out the typical flavour of cheeses made from raw milk.

20. Use according to claim 19, **characterised in that** the strain of *Hafnia alvei* does not contain the eae gene.

21. Dairy composition, notably milk or cheese curd, **characterised in that** it comprises a composition as defined in any one of claims 1 to 11.
